# EUROPEAN PATENT APPLICATION

(11) **EP 3 783 499 A2**
(43) Date of publication of application: **24.02.2021**
(21) Application number: 20189406.0
(22) Date of filing: 29.06.2017
(51) Int. Cl.: G06F 13/38

(54) **METHOD FOR DETERMINING ROLE OF ELECTRONIC DEVICE AND ELECTRONIC DEVICE THEREOF**

(30) Priority: 29.06.2016 KR 20160082041
(62) Divisional of application: 17820551.4
(71) Applicant: Samsung Electronics Co., Ltd., Gyeonggi-do 16677 (KR)
(72) Inventor: LEE, Woo-Kwang, 16677 Suwon-si, (KR); SHIN, Dong-Rak, 16677 Suwon-si, (KR); LIM, Ho-Yeong, 16677 Suwon-si, (KR); SON, Dong-Il, 16677 Suwon-si, (KR)
(74) Representative: HGF

(57) **Abstract**

The present disclosure provides methods and devices for determining a role of an electronic device for an external electronic device upon connecting the electronic device with the external electronic device. An electronic device may comprise a first circuit configured to provide first power to a first external electronic device, a second circuit configured to receive second power from the first external electronic device or a second external electronic device, a connector configured to be electrically connected to the first external electronic device or the second external electronic device, the connector including a configuration pin configured to selectively connect to the first circuit or the second circuit based on a first connection setting, and a processor configured to control the connector, the processor may be further configured to determine a second connection setting to be used for connection of the configuration pin to the first external electronic device or the second external electronic device based on, at least, context information related to the electronic device, context information related the first external electronic device, or context information related to the second external electronic device and to selectively connect the configuration pin to the first circuit or the second circuit based on the second connection setting.

## Description

### Technical Field

The present disclosure relates generally to methods and devices for determining a role of an electronic device for an external electronic device upon connecting the electronic device with the external electronic device.

### Background Art

Electronic devices are being developed in various forms to connect with various types of external electronic devices to interact and communicate data with the external electronic devices.

Universal serial bus on-the-go (USB OTG) is a USB standard modified to enable operation among portable electronic devices without involvement of a main computer and adds, to the legacy USB 2.0 specification, two protocols: the host negotiation protocol (HNP), which allows each device to function as a host within a limited range so as to enable point-to-point communication between peripheral devices, and the session request protocol (SRP), which maintains connection only when there is a request from the opposite party's device so as to reduce battery consumption among devices.

According to the prior art, if an electronic device is physically connected with an external electronic device through a dedicated USB OTG cable, its role, as a host or client, is determined depending on the direction of the cable connection.

Recently, USB type-C, as a next-generation connector interface, is being actively adopted in all industry sectors including automotive, industrial, or internet of things (IoT) fields, as well as personal electronic device or mobile computing industry, thanks to excellent robustness and convenience and the capability of transmission of power, data, or video.

As per the USB type-C specification, internal communication is carried out through configuration pins CC1 and CC2 inside the connector interface, and whether the electronic device plays a role as host or client may be determined depending on which one of the pull-up resistor (Rp) and the pull-down resistor (Rd) the CC1 and CC2 pins are connected to. In the case of the dual role port (DRP), the electronic device might not be in the state where its role has not yet been determined, so that the CC1 and CC2 pins are toggled between Rp and Rd at predetermined periods rather than remaining connected with the resistor (Rp or Rd). For such reason, in the case where both the electronic device and the external electronic device support the DRP, the role of the electronic device may randomly be determined regardless of the user's intention.

### Disclosure of Invention

### Solution to Problem

According to various example embodiments of the present disclosure, a method and device capable of dynamically determining or varying the role of an electronic device when the electronic device is connected with an external electronic device via a USB type-C connector may be provided.

According to an example embodiment of the present disclosure, an electronic device may include a first circuit configured to provide first power to a first external electronic device, a second circuit configured to receive second power from the first external electronic device or a second external electronic device, a connector configured to electrically connect to the first external electronic device or the second external electronic device, the connector including a configuration pin configured to selectively connect to the first circuit or the second circuit based on a first connection setting, and a processor configured to control the connector, the processor may be configured to determine a second connection setting to be used for connection of the configuration pin to the first external electronic device or the second external electronic device based on, at least one of context information related to the electronic device, the first external electronic device, or the second external electronic device and to selectively connect the configuration pin to the first circuit or the second circuit based on the second connection setting.

According to an example embodiment of the present disclosure, an electronic device may comprise a first circuit configured to operate the electronic device as a host for a first external electronic device, a second circuit configured to operate the electronic device as a client for the first external electronic device or a second external electronic device, a connector configured to electrically connect to the first external electronic device or the second external electronic device, the connector including a configuration pin configured to selectively connect to the first circuit or the second circuit based on a first connection setting, and a processor configured to control the connector, the processor may be configured to determine a second connection setting to be used for connection of the configuration pin to the first external electronic device or the second external electronic device based on at least one of context information related to the electronic device, the first external electronic device, or the second external electronic device and to selectively connect the configuration pin to the first circuit or the second circuit based on the second connection setting.

According to an example embodiment of the present disclosure, a method for determining a role of an electronic device electrically connected with an external electronic device via a connector may comprise selectively connecting a configuration pin included in the connector to a first circuit or a second circuit based on a first connection setting, determining a second connection setting to be used for connection of the configuration pin to the external electronic device based on at least one of context information related to the electronic device or the external electronic device, selectively connecting the configuration pin to the first circuit or the second circuit based on the second connection setting, and determining whether the electronic device operates in a first state or a second state based on whether the configuration pin is connected to the first circuit or the second circuit when the electronic device is electrically connected with the external electronic device via the connector.

Other aspects, advantages, and salient features of the disclosure will become apparent from the following detailed description, which, taken in conjunction with the annexed drawings, discloses various example embodiments of the disclosure.

### Brief Description of Drawings

The above and other aspects, features and attendant advantages of the present disclosure will be more apparent and readily appreciated from the following detailed description, taken in conjunction with the accompanying drawings, in which like reference numerals refer to like elements, and wherein:
Fig. 1 is a block diagram illustrating an example electronic device in a network environment according to an example embodiment of the present disclosure;
Fig. 2 is a block diagram illustrating an example electronic device according to an example embodiment of the present disclosure;
Fig. 3 is a block diagram illustrating an example program module according to an example embodiment of the present disclosure;
Fig. 4A is a diagram illustrating an example electronic device and an external electronic device connected together via a USB cable according to an example embodiment of the present disclosure;
Fig. 4B is a block diagram illustrating an example electronic device and an external electronic device according to an example embodiment of the present disclosure;
Fig. 5 is a diagram illustrating an example connector pin map structure according to an example embodiment of the present disclosure;
Figs. 6A and 6B are circuit diagrams illustrating an example connector connection between electronic devices according to an example embodiment of the present disclosure;
Fig. 7 is a diagram illustrating example switching timing for determining an operational state upon connection between electronic devices according to an example embodiment of the present disclosure;
Fig. 8A and 8B are a diagrams illustrating an example of varying a switching timing for determining an operational state of an electronic device according to an example embodiment of the present disclosure;
Fig. 9 is a flowchart illustrating an example method for determining an operational state of an electronic device according to an example embodiment of the present disclosure;
Fig. 10 is a flowchart illustrating an example process for determining an operational state as per a connector connection by an electronic device according to an example embodiment of the present disclosure;
Fig. 11 is a diagram illustrating an example of a setting screen of an electronic device according to an example embodiment of the present disclosure; and
Figs. 12A, 12B and 12C are diagrams illustrating example screens of an electronic device according to an example embodiment of the present disclosure.

Throughout the drawings, like reference numerals will be understood to refer to like parts, components, and structures.

### Mode for the Invention

Hereinafter, various example embodiments of the present disclosure are described with reference to the accompanying drawings. However, it should be appreciated that the present disclosure is not limited to the embodiments and the terminology used herein, and all changes and/or equivalents or replacements thereto also belong to the scope of the present disclosure. The same or similar reference numerals may be used to refer to the same or similar elements throughout the specification and the drawings.

It will be understood that the singular forms "a," "an," and "the" include plural references unless the context clearly dictates otherwise. As used herein, the terms "A or B" or "at least one of A and/or B" may include all possible combinations of A and B. As used herein, the terms "first" and "second" may modify various components regardless of importance and/or order and are used to distinguish a component from another without limiting the components. It will be understood that when an element (e.g., a first element) is referred to as being (operatively or communicatively) "coupled with/to," or "connected with/to" another element (e.g., a second element), it can be coupled or connected with/to the other element directly or via a third element.

As used herein, the terms "configured to" may be interchangeably used with other terms, such as "suitable for," "capable of," "modified to," "made to," "adapted to," "able to," or "designed to" in hardware and/or software based on the context. Rather, the term "configured to" may refer, for example, to a situation in which a device can perform an operation together with another device or parts. For example, the term "processor configured (or set) to perform A, B, and C" may refer, for example, to a general-purpose processor (e.g., a CPU or application processor) that may perform the operations by executing one or more software programs stored in a memory device or a dedicated processor (e.g., an embedded processor) for performing the operations.

Examples of the electronic device according to various example embodiments of the present disclosure may include at least one of a smartphone, a tablet personal computer (PC), a mobile phone, a video phone, an e-book reader, a desktop PC, a laptop computer, a netbook computer, a workstation, a server, a personal digital assistant (PDA), a portable multimedia player (PMP), a MP3 player, a medical device, a camera, or a wearable device, or the like, but is not limited thereto. The wearable device may include at least one of an accessory-type device (e.g., a watch, a ring, a bracelet, an anklet, a necklace, glasses, contact lenses, or a head-mounted device (HMD)), a fabric- or clothes-integrated device (e.g., electronic clothes), a body attaching-type device (e.g., a skin pad or tattoo), or a body implantable device, or the like, but is not limited thereto.

In some example embodiments, examples of the smart home appliance may include at least one of a television, a digital video disk (DVD) player, an audio player, a refrigerator, an air conditioner, a cleaner, an oven, a microwave oven, a washer, a drier, an air cleaner, a set-top box, a home automation control panel, a security control panel, a TV box (e.g., Samsung HomeSync™, Apple TV™, or Google TV™), a gaming console (Xbox™, PlayStation™), an electronic dictionary, an electronic key, a camcorder, or an electronic picture frame, or the like, but is not limited thereto.

According to an example embodiment of the present disclosure, the electronic device may include at least one of various medical devices (e.g., diverse portable medical measuring devices (a blood sugar measuring device, a heartbeat measuring device, or a body temperature measuring device), a magnetic resource angiography (MRA) device, a magnetic resource imaging (MRI) device, a computed tomography (CT) device, an imaging device, or an ultrasonic device), a navigation device, a global navigation satellite system (GNSS) receiver, an event data recorder (EDR), a flight data recorder (FDR), an automotive infotainment device, an sailing electronic device (e.g., a sailing navigation device or a gyro compass), avionics, security devices, vehicular head units, industrial or home robots, drones, automatic teller's machines (ATMs), point of sales (POS) devices, or internet of things (IoT) devices (e.g., a bulb, various sensors, a sprinkler, a fire alarm, a thermostat, a street light, a toaster, fitness equipment, a hot water tank, a heater, or a boiler), or the like, but is not limited therto.

According to various example embodiments of the disclosure, examples of the electronic device may at least one of part of a piece of furniture, building/structure or vehicle, an electronic board, an electronic signature receiving device, a projector, or various measurement devices (e.g., devices for measuring water, electricity, gas, or electromagnetic waves), or the like, but is not limited thereto. According to embodiments of the present disclosure, the electronic device may be flexible or may be a combination of the above-enumerated electronic devices. According to an embodiment of the present disclosure, the electronic device is not limited to the above-listed embodiments. As used herein, the term "user" may denote a human or another device (e.g., an artificial intelligent electronic device) using the electronic device.

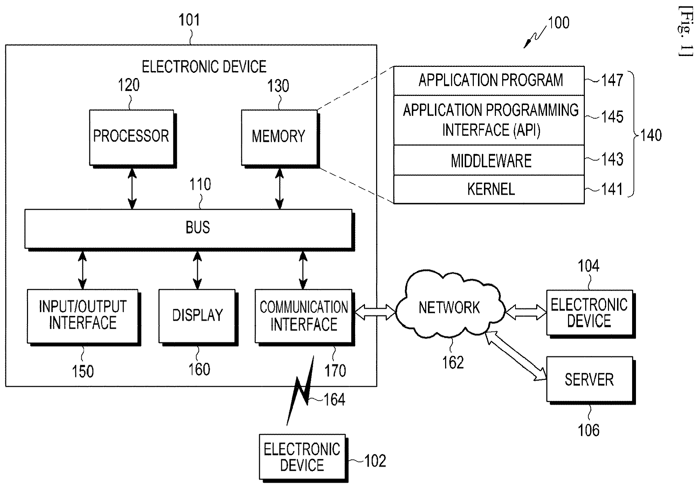

Referring to Fig. 1, according to an example embodiment of the present disclosure, an electronic device 101 may be included in a network environment 100. The electronic device 101 may include a bus 110, a processor (e.g., including processing circuitry) 120, a memory 130, an input/output interface (e.g., including interface circuitry) 150, a display 160, and a communication interface (e.g., including communication circuitry) 170. In some embodiments, the electronic device 101 may exclude at least one of the components or may add another component.

The bus 110 may include a circuit for connecting the components 110 to 170 with one another and transferring communications (e.g., control messages or data) between the components.

The processor 120 may include various processing circuitry, such as, for example, and without limitation, one or more of a dedicated processor, a central processing unit (CPU), an application processor (AP), or a communication processor (CP). The processor 120 may perform control on at least one of the other components of the electronic device 101, and/or perform an operation or data processing relating to communication.

The memory 130 may include a volatile and/or non-volatile memory. For example, the memory 130 may store commands or data related to at least one other component of the electronic device 101. According to an embodiment of the present disclosure, the memory 130 may store software and/or a program 140. The program 140 may include, e.g., a kernel 141, middleware 143, an application programming interface (API) 145, and/or an application program (or "application") 147. At least a portion of the kernel 141, middleware 143, or API 145 may be denoted an operating system (OS). For example, the kernel 141 may control or manage system resources (e.g., the bus 110, processor 120, or a memory 130) used to perform operations or functions implemented in other programs (e.g., the middleware 143, API 145, or application program 147). The kernel 141 may provide an interface that allows the middleware 143, the API 145, or the application 147 to access the individual components of the electronic device 101 to control or manage the system resources.

The middleware 143 may function as a relay to allow the API 145 or the application 147 to communicate data with the kernel 141, for example. Further, the middleware 143 may process one or more task requests received from the application program 147 in order of priority. For example, the middleware 143 may assign a priority of using system resources (e.g., bus 110, processor 120, or memory 130) of the electronic device 101 to at least one of the application programs 147 and process one or more task requests. The API 145 is an interface allowing the application 147 to control functions provided from the kernel 141 or the middleware 143. For example, the API 133 may include at least one interface or function (e.g., a command) for filing control, window control, image processing or text control. For example, the input/output interface 150 may transfer commands or data input from the user or other external device to other component(s) of the electronic device 101 or may output commands or data received from other component(s) of the electronic device 101 to the user or other external devices.

The display 160 may include, e.g., a liquid crystal display (LCD), a light emitting diode (LED) display, an organic light emitting diode (OLED) display, or a microelectromechanical systems (MEMS) display, or an electronic paper display, or the like, but is not limited thereto. The display 160 may display, e.g., various contents (e.g., text, images, videos, icons, or symbols) to the user. The display 160 may include a touchscreen and may receive, e.g., a touch, gesture, proximity or hovering input using an electronic pen or a body portion of the user.

The communication interface 170 may include various communication circuitry and set up communication between the electronic device 101 and an external electronic device (e.g., a first electronic device 102, a second electronic device 104, or a server 106). For example, the communication interface 170 may be connected with the network 162 through wireless or wired communication to communicate with the external electronic device. Additionally, the communication interface 170 may be connected with another electronic device (e.g., first electronic device 102) via a short-range wireless communication 164.

The wireless communication may include cellular communication which uses at least one of, e.g., long term evolution (LTE), long term evolution- advanced (LTE-A), code division multiple access (CDMA), wideband code division multiple access (WCDMA), universal mobile telecommunication system (UMTS), wireless broadband (WiBro), or global system for mobile communication (GSM). According to an embodiment of the present disclosure, the wireless communication may include at least one of, e.g., widreless fidelity (Wi-Fi), Bluetooth, Bluetooth low power (BLE), Zigbee, near field communication (NFC), magnetic secure transmission (MST), radio frequency, or body area network (BAN). According to an embodiment of the present disclosure, the wireless communication may include global navigation satellite system (GNSS). The GNSS may be, e.g., global positioning system (GPS), global navigation satellite system (Glonass), Beidou navigation satellite system (hereinafter, "Beidou") or Galileo, or the European global satellite-based navigation system. Hereinafter, the terms "GPS" and the "GNSS" may be interchangeably used herein. The wired connection may include at least one of, e.g., universal serial bus (USB), high definition multimedia interface (HDMI), recommended standard (RS)-232, power line communication (PLC) or plain old telephone service (POTS). The network 162 may include at least one of telecommunication networks, e.g., a computer network (e.g., local area network (LAN) or wide area network (WAN)), Internet, or a telephone network.

The first and second external electronic devices 102 and 104 each may be a device of the same or a different type from the electronic device 101. According to an embodiment of the present disclosure, all or some of operations executed on the electronic device 101 may be executed on another or multiple other electronic devices (e.g., the electronic devices 102 and 104 or server 106). According to an embodiment of the present disclosure, when the electronic device 101 should perform some function or service automatically or at a request, the electronic device 101, instead of executing the function or service on its own or additionally, may request another device (e.g., electronic devices 102 and 104 or server 106) to perform at least some functions associated therewith. The other electronic device (e.g., electronic devices 102 and 104 or server 106) may execute the requested functions or additional functions and transfer a result of the execution to the electronic device 101. The electronic device 101 may provide a requested function or service by processing the received result as it is or additionally. To that end, a cloud computing, distributed computing, or client-server computing technique may be used, for example.

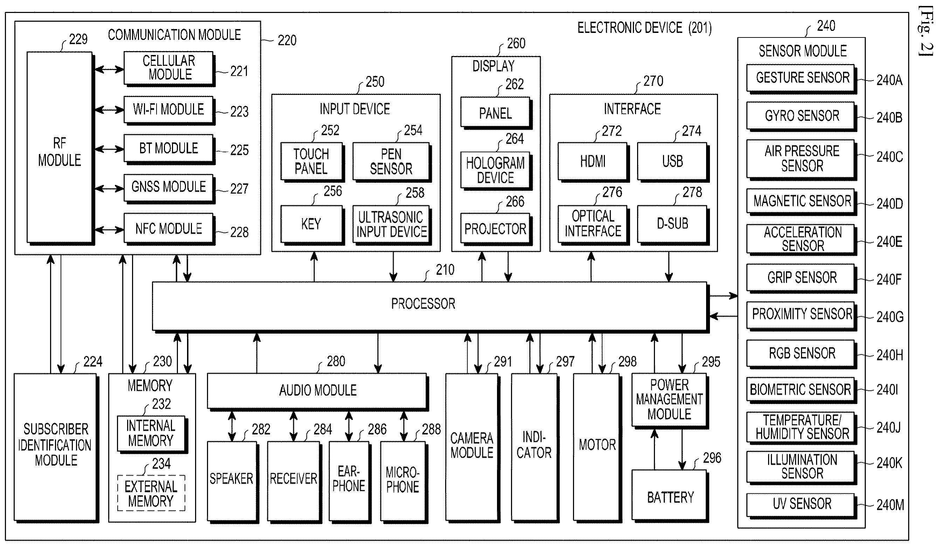

Fig. 2 is a block diagram illustrating an example electronic device 201 according to an example embodiment of the present disclosure.

The electronic device 201 may include the whole or part of the configuration of, e.g., the electronic device 101 illustrated in Fig. 1. The electronic device 201 may include one or more processors (e.g., application processors (APs)) (e.g., including processing circuitry) 210, a communication module (e.g., including communication circuitry) 220, a subscriber identification module (SIM) 224, a memory 230, a sensor module 240, an input device (e.g., including input circuitry) 250, a display 260, an interface (e.g., including interface circuitry) 270, an audio module 280, a camera module 291, a power management module 295, a battery 296, an indicator 297, and a motor 298.

The processor 210 may include various processing circuitry and control multiple hardware and software components connected to the processor 210 by running, e.g., an operating system or application programs, and the processor 210 may process and compute various data. The processor 210 may be implemented in, e.g., a system on chip (SoC). According to an embodiment of the present disclosure, the processor 210 may further include a graphic processing unit (GPU) and/or an image signal processor. The processor 210 may include at least some (e.g., the cellular module 221) of the components shown in Fig. 2. The processor 210 may load a command or data received from at least one of other components (e.g., a non-volatile memory) on a volatile memory, process the command or data, and store resultant data in the non-volatile memory.

The communication module 220 may have the same or similar configuration to the communication interface 170. The communication module 220 may include various communication circuitry, such as, for example, and without limitation, a cellular module 221, a wireless fidelity (Wi-Fi) module 223, a Bluetooth (BT) module 225, a GNSS module 227, a NFC module 228, and a RF module 229. The cellular module 221 may provide voice call, video call, text, or Internet services through, e.g., a communication network. The cellular module 221 may perform identification or authentication on the electronic device 201 in the communication network using a subscriber identification module 224 (e.g., the SIM card). According to an embodiment of the present disclosure, the cellular module 221 may perform at least some of the functions providable by the processor 210. According to an embodiment of the present disclosure, the cellular module 221 may include a communication processor (CP). According to an embodiment of the present disclosure, at least some (e.g., two or more) of the cellular module 221, the Wi-Fi module 223, the Bluetooth module 225, the GNSS module 227, or the NFC module 228 may be included in a single integrated circuit (IC) or an IC package. The RF module 229 may communicate data, e.g., communication signals (e.g., RF signals). The RF module 229 may include, e.g., a transceiver, a power amp module (PAM), a frequency filter, a low noise amplifier (LNA), or an antenna. According to an embodiment of the present disclosure, at least one of the cellular module 221, the Wi-Fi module 223, the Bluetooth module 225, the GNSS module 227, or the NFC module 228 may communicate RF signals through a separate RF module.

The subscription identification module 224 may include, e.g., a card including a subscriber identification module or an embedded SIM, and may contain unique identification information (e.g., an integrated circuit card identifier (ICCID) or subscriber information (e.g., an international mobile subscriber identity (IMSI)).

The memory 230 (e.g., the memory 130) may include, e.g., an internal memory 232 and/or an external memory 234. The internal memory 232 may include at least one of, e.g., a volatile memory (e.g., a dynamic RAM (DRAM), a static RAM (SRAM), a synchronous dynamic RAM (SDRAM), etc.) or a non-volatile memory (e.g., a one-time programmable ROM (OTPROM), a programmable ROM (PROM), an erasable and programmable ROM (EPROM), an electrically erasable and programmable ROM (EEPROM), a mask ROM, a flash ROM, a flash memory (e.g., a NAND flash, or a NOR flash), a hard drive, or solid state drive (SSD). The external memory 234 may include a flash drive, e.g., a compact flash (CF) memory, a secure digital (SD) memory, a micro-SD memory, a min-SD memory, an extreme digital (xD) memory, a multi-media card (MMC), or a memory stick™. The external memory 234 may be functionally or physically connected with the electronic device 201 via various interfaces.

For example, the sensor module 240 may measure a physical quantity or detect an operational state of the electronic device 201, and the sensor module 240 may convert the measured or detected information into an electrical signal. The sensor module 240 may include at least one of, e.g., a gesture sensor 240A, a gyro sensor 240B, an atmospheric pressure (e.g., air pressure) sensor 240C, a magnetic sensor 240D, an acceleration sensor 240E, a grip sensor 240F, a proximity sensor 240G, a color sensor 240H (e.g., a red-green-blue (RGB) sensor, a bio (e.g., biometric) sensor 2401, a temperature/humidity sensor 240J, an illumination sensor 240K, or an Ultra Violet (UV) sensor 240M. Additionally or alternatively, the sensing module 240 may include, e.g., an e-nose sensor, an electromyography (EMG) sensor, an electroencephalogram (EEG) sensor, an electrocardiogram (ECG) sensor, an infrared (IR) sensor, an iris sensor, or a finger print sensor. The sensor module 240 may further include a control circuit for controlling at least one or more of the sensors included in the sensing module. According to an embodiment of the present disclosure, the electronic device 201 may further include a processor configured to control the sensor module 240 as part of the processor 210 or separately from the processor 210, and the electronic device 2701 may control the sensor module 240 while the processor 210 is in a sleep mode.

The input device 250 may include various input circuitry, such as, for example, and without limitation, a touch panel 252, a (digital) pen sensor 254, a key 256, or an ultrasonic input device 258. The touch panel 252 may use at least one of capacitive, resistive, infrared, or ultrasonic methods. The touch panel 252 may further include a control circuit. The touch panel 252 may further include a tactile layer and may provide a user with a tactile reaction. The (digital) pen sensor 254 may include, e.g., a part of a touch panel or a separate sheet for recognition. The key 256 may include e.g., a physical button, optical key or key pad. The ultrasonic input device 258 may sense an ultrasonic wave generated from an input tool through a microphone (e.g., the microphone 288) to identify data corresponding to the sensed ultrasonic wave.

The display 260 (e.g., the display 160) may include a panel 262, a hologram device 264, a projector 266, and/or a control circuit for controlling the same. The panel 262 may be implemented to be flexible, transparent, or wearable. The panel 262, together with the touch panel 252, may be configured in one or more modules. The hologram device 264 may make three dimensional (3D) images (holograms) in the air by using light interference. The projector 266 may display an image by projecting light onto a screen. The screen may be, for example, located inside or outside of the electronic device 201.

The interface 270 may include various interface circuitry, such as, for example, and without limitation, a high definition multimedia interface (HDMI) 272, a USB 274, an optical interface 276, or a D-subminiature (D-sub) 278. The interface 270 may be included in e.g., the communication interface 170 shown in Fig. 1. Additionally or alternatively, the interface 270 may include a mobile high-definition link (MHL) interface, a secure digital (SD) card/ multimedia card (MMC) interface, or infrared data association (IrDA) standard interface.

The audio module 280 may converting, e.g., a sound signal into an electrical signal and vice versa. At least a part of the audio module 280 may be included in e.g., the input/output interface 145 as shown in Fig. 1. The audio module 280 may process sound information input or output through e.g., a speaker 282, a receiver 284, an earphone 286, or a microphone 288. For example, the camera module 291 may be a device for capturing still images and videos, and may include, according to an embodiment of the present disclosure, one or more image sensors (e.g., front and back sensors), a lens, an image signal processor (ISP), or a flash such as an LED or xenon lamp. The power manager module 295 may manage power of the electronic device 201, for example. According to an embodiment of the present disclosure, the power manager module 295 may include a power management Integrated circuit (PMIC), a charger IC, or a battery or fuel gauge. The PMIC may have a wired and/or wireless recharging scheme. The wireless charging scheme may include e.g., a magnetic resonance scheme, a magnetic induction scheme, or an electromagnetic wave based scheme, and an additional circuit, such as a coil loop, a resonance circuit, a rectifier, or the like may be added for wireless charging. The battery gauge may measure an amount of remaining power of the battery 296, a voltage, a current, or a temperature while the battery 296 is being charged. The battery 296 may include, e.g., a rechargeable battery or a solar battery.

The indicator 297 may indicate a particular state of the electronic device 201 or a part (e.g., the processor 210) of the electronic device, including e.g., a booting state, a message state, or recharging state. The motor 298 may convert an electric signal to a mechanical vibration and may generate a vibrational or haptic effect. The electronic device 201 may include a mobile TV supporting device (e.g., a GPU) that may process media data as per, e.g., digital multimedia broadcasting (DMB), digital video broadcasting (DVB), or mediaFlo™ standards. Each of the aforementioned components of the electronic device may include one or more parts, and a name of the part may vary with a type of the electronic device. According to various embodiments, the electronic device (e.g., the electronic device 201) may exclude some elements or include more elements, or some of the elements may be combined into a single entity that may perform the same function as by the elements before combined.

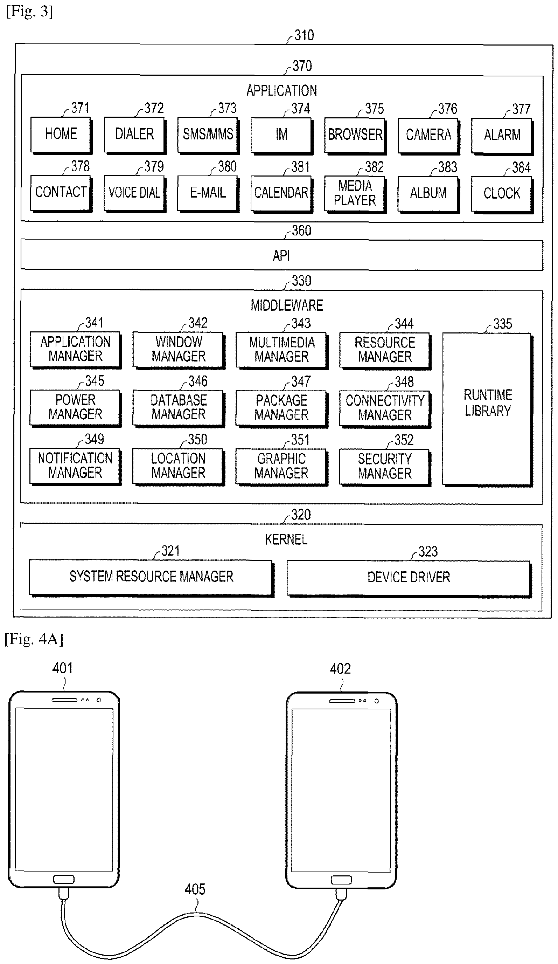

Fig. 3 is a block diagram illustrating an example program module according to an example embodiment of the present disclosure.

According to an embodiment of the present disclosure, the program module 310 (e.g., the program 140) may include an operating system (OS) controlling resources related to the electronic device (e.g., the electronic device 101) and/or various applications (e.g., the application processor 147) driven on the operating system. The operating system may include, e.g., Android™, iOS™, Windows™, Symbian™, Tizen ™, or Bada™. Referring to Fig. 3, the program module 310 may include a kernel 320 (e.g., the kernel 141), middleware 330 (e.g., the middleware 143), an API 360 (e.g., the API 145), and/or an application 370 (e.g., the application program 147). At least a part of the program module 310 may be preloaded on the electronic device or may be downloaded from an external electronic device (e.g., the electronic devices 102 and 104 or server 106).

The kernel 320 may include, e.g., a system resource manager 321 and/or a device driver 323. The system resource manager 321 may perform control, allocation, or recovery of system resources. According to an embodiment of the present disclosure, the system resource manager 321 may include a process managing unit, a memory managing unit, or a file system managing unit. The device driver 323 may include, e.g., a display driver, a camera driver, a Bluetooth driver, a shared memory driver, a USB driver, a keypad driver, a Wi-Fi driver, an audio driver, or an inter-process communication (IPC) driver.

The middleware 330 may provide various functions to the application 370 through the API 360 so that the application 370 may use limited system resources in the electronic device or provide functions jointly required by applications 370. According to an embodiment of the present disclosure, the middleware 330 may include at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, or a security manager 352.

The runtime library 335 may include a library module used by a compiler in order to add a new function through a programming language while, e.g., the application 370 is being executed. The runtime library 335 may perform input/output management, memory management, or arithmetic function processing. The application manager 341 may manage the life cycle of, e.g., the applications 370. The window manager 342 may manage GUI resources used on the screen. The multimedia manager 343 may grasp formats necessary to play media files and use a codec appropriate for a format to perform encoding or decoding on media files. The resource manager 344 may manage the source code or memory space of the application 370. The power manager 345 may manage, e.g., the battery capability or power and provide power information necessary for the operation of the electronic device. According to an embodiment of the present disclosure, the power manager 345 may interwork with a basic input/output system (BIOS). The database manager 346 may generate, search, or vary a database to be used in the applications 370. The package manager 347 may manage installation or update of an application that is distributed in the form of a package file.

The connectivity manager 348 may manage, e.g., wireless connectivity. The notification manager 349 may provide an event, e.g., arrival message, appointment, or proximity alert, to the user. The location manager 350 may manage, e.g., locational information on the electronic device. The graphic manager 351 may manage, e.g., graphic effects to be offered to the user and their related user interface. The security manager 352 may provide system security or user authentication, for example. According to an embodiment of the present disclosure, the middleware 330 may include a telephony manager for managing the voice or video call function of the electronic device or a middleware module able to form a combination of the functions of the above-described elements. According to an embodiment of the present disclosure, the middleware 330 may provide a module specified according to the type of the operating system. The middleware 330 may dynamically omit some existing components or add new components. The API 360 may be a set of, e.g., API programming functions and may have different configurations depending on operating systems. For example, in the case of Android or iOS, one API set may be provided per platform, and in the case of Tizen, two or more API sets may be offered per platform.

The application 370 may include an application that may provide, e.g., a home 371, a dialer 372, an SMS/MMS 373, an instant message (IM) 374, a browser 375, a camera 376, an alarm 377, a contact 378, a voice dial 379, an email 380, a calendar 381, a media player 382, an album 383, or a clock 384, a heath-care (e.g., measuring the degree of workout or blood sugar), or provision of environmental information (e.g., provision of air pressure, moisture, or temperature information). According to an embodiment of the present disclosure, the application 370 may include an information exchanging application supporting information exchange between the electronic device and an external electronic device. Examples of the information exchange application may include, but is not limited to, a notification relay application for transferring specific information to the external electronic device, or a device management application for managing the external electronic device. For example, the notification relay application may transfer notification information generated by other application of the electronic device to the external electronic device or receive notification information from the external electronic device and provide the received notification information to the user. For example, the device management application may install, delete, or update a function (e.g., turn-on/turn-off the external electronic device (or some elements) or adjusting the brightness (or resolution) of the display) of the external electronic device communicating with the electronic device or an application operating on the external electronic device. According to an embodiment of the present disclosure, the application 370 may include an application (e.g., a health-care application of a mobile medical device) designated according to an attribute of the external electronic device. According to an embodiment of the present disclosure, the application 370 may include an application received from the external electronic device. At least a portion of the program module 310 may be implemented (e.g., executed) in software, firmware, hardware (e.g., the processor 210), or a combination of at least two or more thereof and may include a module, program, routine, command set, or process for performing one or more functions.

As used herein, the term "module" may include a unit configured in hardware, software, or firmware and/or any combination thereof and may be interchangeably used with other term, e.g., a logic, logic block, part, or circuit. The module may be a single integral part or a minimum unit or part of performing one or more functions. The module may be implemented mechanically or electronically and may include, for example, and without limitation, a dedicated processor, a CPU, an application-specific integrated circuit (ASIC) chip, field-programmable gate arrays (FPGAs), or programmable logic device, that has been known or to be developed in the future as performing some operations.

According to an embodiment of the present disclosure, at least a part of the device (e.g., modules or their functions) or method (e.g., operations) may be implemented as instructions stored in a computer-readable storage medium (e.g., the memory 130), e.g., in the form of a program module. The instructions, when executed by a processor (e.g., the processor 120), may enable the processor to carry out a corresponding function. The computer-readable medium may include, e.g., a hard disk, a floppy disc, a magnetic medium (e.g., magnetic tape), an optical recording medium (e.g., CD-ROM, DVD, magnetic-optical medium (e.g., floptical disk), or an embedded memory. The instruction may include a code created by a compiler or a code executable by an interpreter. Modules or programming modules in accordance with various embodiments of the present disclosure may include at least one or more of the aforementioned components, omit some of them, or further include other additional components. Operations performed by modules, programming modules or other components in accordance with various embodiments of the present disclosure may be carried out sequentially, in parallel, repeatedly or heuristically, or at least some operations may be executed in a different order or omitted or other operations may be added.

Fig. 4A is a diagram illustrating an example in which an electronic device and an external electronic device are connected together via a USB cable according to an example embodiment of the present disclosure.

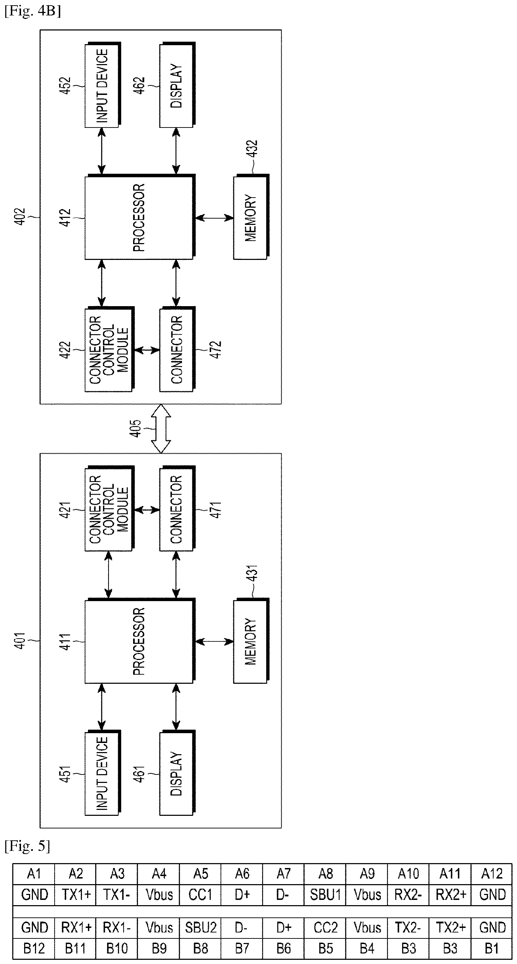

Fig. 4B is a block diagram illustrating an example electronic device and an external electronic device according to an example embodiment of the present disclosure. According to an example embodiment of the present disclosure, an electronic device 401 and an external electronic device 402 may include the whole or part of the electronic device 101 of Fig. 1 or the electronic device 201 of Fig. 2.

Referring to Figs. 4A and 4B, the electronic device 401 and the external electronic device 402 may be electrically connected together through, for example, a USB cable 405. According to an embodiment of the present disclosure, the USB cable 405 may be a USB type-C cable. The electronic device 401 and the external electronic device 402, respectively, may include processors (e.g., including processing circuitry) 411 and 412, connector control modules (e.g., including connector control circuitry) 421 and 422, memories 431 and 432, input devices (e.g., including input circuitry) 451 and 452, displays 461 and 462, and connectors 471 and 472. The electronic device 401 and the external electronic device 402 may be connected together through the respective configuration channel (CC) pins and USB data pins of the connectors 471 and 472. For example, the respective connectors 471 and 472 of the electronic device 401 and the external electronic device 402 may be USB type-C-based connectors. The electronic device 401 and the external electronic device 402 may be substantially the same or similar electronic devices except that the electronic device 401 and the external electronic device 402 are connected with each other via the USB cable 405 and are determined to have different operational states (e.g., host and client). Hereinafter, for ease of description and understanding, the description focuses primarily on the electronic device 401.

According to an example embodiment of the present disclosure, the connector control module 421 may include various connector control circuitry and may be connected with the external electronic device 402 via the connector 471 and may perform CC (configuration channel) communication with the connector control module 422 of the external electronic device 402 as per the method specified in the USB type-C specification. For example, the connector control module 421 may include a configuration channel inter circuit (CCIC). The connector control module 421 may transmit and/or receive messages using the configuration pins (CC1 and CC2) in a biphase marked coding (BMC) scheme. According to an example embodiment of the present disclosure, the connector control module 421 may include circuitry configured to determine the operational state of the electronic device 401 depending on the state of connection of the configuration pins.

According to an example embodiment of the present disclosure, the connector control module 421 may include a first circuit selectively connected to the configuration pins to provide first power to the external electronic device 402 connected via the connector 471. The connector control module 421 may include a second circuit selectively connected to the configuration pins to receive second power from the external electronic device 402 connected via the connector 471. For example, the connector control module 421 may be configured so that the configuration pins are connected to the first circuit when the electronic device 401 is in a source operation mode where the electronic device 401 provides the first power to the external electronic device 402. On the other hand, the connector control module 421 may be configured so that the configuration pins are connected to the second circuit when the electronic device 401 is in a sink operation mode where the electronic device 401 receives the second power from the external electronic device 402. Additionally, when the electronic device 401 is in a dual mode that supports both the source operation mode and the sink operation mode, a determination as to whether the electronic device 401 operates in the source mode or the sink mode is delayed, so that the configuration pins may be configured to selectively be connected to the first circuit or the second circuit.

According to an example embodiment of the present disclosure, the connector control module 421 may include a first circuit selectively connected to the configuration pins to allow the electronic device 401 to operate as a host for the external electronic device 402 connected via the connector 471. The connector control module 421 may include a second circuit selectively connected to the configuration pins to allow the electronic device 401 to operate as a client for the external electronic device 402 connected via the connector 471. For example, the connector control module 421 may be configured so that the configuration pins are connected to the first circuit when the electronic device 401 is in a host operation mode where the electronic device 401 operates as a host for the external electronic device 402. The connector control module 421 may be configured so that the configuration pins are connected to the second circuit when the electronic device 401 is in a client operation mode where the electronic device 401 operates as a client for the external electronic device 402. When the electronic device 401 is in a dual mode that supports both the host operation mode and the client operation mode, a determination as to whether the electronic device 401 operates in the host operation mode or the client operation mode is delayed, so that the configuration pins may be configured to selectively be connected to the first circuit or the second circuit.

According to an example embodiment of the present disclosure, the first circuit may include a pull-up (Rp) resistor, and the second circuit may include a pull-down (Rd) resistor. The Rp resistor and the Rd resistor may, for example, be used to identify whether a circuit connected by the configuration pins is the first circuit or second circuit. Whether the configuration pins are connected to the first circuit or the second circuit may be identified (e.g., determined) by detecting a current value through circuit current detection and calculating the resistance of the circuit from the detected current value.

According to an example embodiment of the present disclosure, the memory 431 may be the memory 130 illustrated in Fig. 1. The memory 431 may store a program necessary for functions and operations and various data generated while the program runs according to an embodiment of the present disclosure. The memory 431 may largely include a program area and a data area. The program area may store relevant information for driving the electronic device 401, such as operating system (OS) for booting up the electronic device 401. The data area may store data transmitted or received and data generated according to an embodiment of the present disclosure. Further, the memory 431 may include at least one storage medium of a flash memory, a hard disk, a multimedia card, a micro-type memory (e.g., a secure digital (SD) or an extreme digital (xD) memory), a random access memory (RAM), or a read only memory (ROM). According to an embodiment of the present disclosure, the memory 431 may store information for communication with the external electronic device 402 and the data transmitted and/or received.

According to an embodiment of the present disclosure, the input device 451 may be the input/output interface 150 illustrated in Fig. 1. The input device 450 may transfer, to the processor 411, various information, such as number and character information entered from the user and signals entered in relation with setting various functions and controlling functions by the electronic device 401. The input device 451 may support a user input for running an application or module supporting a particular function. The input device 451 may include various input circuitry, such as, for example, and without limitation, at least one of a key input, such as a keyboard or keypad, a touch input, such as a touch sensor or touch pad, a sound source input, a camera, or various sensors, and may include a gesture input. When the electronic device 401 is connected with the external electronic device 402 via the connector 471, the input device 451 may receive a user input for the operation mode of the electronic device 401 and transfer the same to the processor 411.

According to an example embodiment of the present disclosure, when the electronic device 401 is connected with the external electronic device 402 and is being operated in the source operation mode or sink operation mode, the input device 451 may receive a user request for changing the operation of the electronic device 401 from the current operation mode to another operation mode and transfer the same to the processor 411.

According to an embodiment of the present disclosure, when the electronic device 401 is connected with the external electronic device 402 and is being operated in the host operation mode or client operation mode, the input device 451 may receive a user request for changing the operation of the electronic device 401 from the current operation mode to another operation mode and transfer the same to the processor 411.

According to an embodiment of the present disclosure, the display 461 may be the display 160 illustrated in Fig. 1. The display 461 may output information about the result of an operation (e.g., at least one of text, image or video) under the control of the processor 411. The display 461 may display, on the screen, an input pad (e.g., a button) for entering at least one of various numbers, characters, or symbols on an input window, in various manners. When the electronic device 401 is connected with the external electronic device 402 via the connector 471, the display 461 may display a setting screen for setting an operation mode of the electronic device 401.

According to an embodiment of the present disclosure, when the electronic device 401 is connected with the external electronic device 402 and is being operated in the source operation mode or sink operation mode, the display 461 may display a setting screen for changing the operation of the electronic device 401 from the current operation mode to another operation mode.

According to an embodiment of the present disclosure, when the electronic device 401 is connected with the external electronic device 402 and is being operated in the host operation mode or client operation mode, the display 461 may display a setting screen for changing the operation of the electronic device 401 from the current operation mode to another operation mode.

According to an embodiment of the present disclosure, the processor 411 may process at least part of information obtained from other components (e.g., the connector control module 421, the memory 431, the input device 451, the display 461, and the connector 471) and use the same in various manners.

According to an embodiment of the present disclosure, the processor 411 may control the connector control module 421.

According to an embodiment of the present disclosure, the connector control module 421 may include various connector control circuitry, such as, for example, and without limitation, a first circuit for providing first power to the external electronic device 402 and a second circuit for receiving second power from the external electronic device 402. The connector control module 421 may also include configuration pins configured to be selectively connected with the first circuit or the second circuit depending on a first connection setting. For example, the first connection setting may be a setting designated as default. When the electronic device 401 is connected with the external electronic device 402 via the connector 471, and the electronic device 401 needs to operate in the source operation mode where the electronic device 401 provides the first power to the external electronic device 402, the processor 411 may control the connector control module 421 so that the configuration pins are connected to the first circuit. When the electronic device 401 needs to operate in the sink operation mode where the electronic device 401 receives the second power from the external electronic device 402, the processor 411 may control the connector control module 421 so that the configuration pins are connected to the second circuit. When the electronic device 401 is in a dual mode that supports both the source operation mode and the sink operation mode, the processor 411 may control the connector control module 421 so that the configuration pins may be selectively be connected to the first circuit or the second circuit.

According to an example embodiment of the present disclosure, the connector control module 421 may include a first circuit enabling the electronic device 401 to operate as a host for the external electronic device 402 or a second circuit enabling the electronic device 401 to operate as a client for the external electronic device 402. The connector control module 421 may also include configuration pins configured to be selectively connected with the first circuit or the second circuit depending on a first connection setting. When the electronic device 401 is connected with the external electronic device 402 via the connector 471, and the electronic device 401 needs to operate in the host operation mode for the external electronic device 402, the processor 411 may control the connector control module 421 so that the configuration pins are connected to the first circuit. When the electronic device 401 needs to operate in the client operation mode for the external electronic device 402, the processor 411 may control the connector control module 421 so that the configuration pins are connected to the second circuit. When the electronic device 401 is in a dual mode that supports both the host operation mode and the client operation mode, the processor 411 may control the connector control module 421 so that the configuration pins may be selectively be connected to the first circuit or the second circuit.

According to an example embodiment of the present disclosure, the host operation mode of the electronic device 401 may support the source operation mode in which, when the electronic device 401 is connected with the external electronic device 402 via the connector 471, the electronic device 401 may provide power to the external electronic device 402. The host operation mode may also support a downstream facing port (DFP) mode in which the electronic device 401 transmits data to the external electronic device 402. The host operation mode, the source operation mode, or the DFP mode may perform the same or similar function.

According to an example embodiment of the present disclosure, the client operation mode of the electronic device 401 may support the sink operation mode in which, when the electronic device 401 is connected with the external electronic device 402 via the connector 471, the electronic device 401 may receive power from the external electronic device 402. The client operation mode may also support an upstream facing port (UFP) in which the electronic device 401 receives data from the external electronic device 402. The client operation mode, the sink operation mode, or the UFP mode may perform the same or similar function.

According to an example embodiment of the present disclosure, in the host operation mode, the electronic device 401 may support the sink operation mode or may selectively support the source operation mode and the sink operation mode. Further, in the client operation mode, the electronic device 401 may support the source operation mode or may selectively support the source operation mode and the sink operation mode.

According to an example embodiment of the present disclosure, when the electronic device 401 is connected with the external electronic device 402 through the connector 471, the electronic device 401 may support a dual mode in which the electronic device 401 may operate in the source operation mode or the sink operation mode. In the dual mode, the configuration pins (CC1 and CC2) may be connected to the first circuit or the second circuit while being periodically toggled between the first circuit and the second circuit rather than remaining connected to one of the first circuit or the second circuit. For example, where, in the dual mode, the operation mode of the external electronic device 402 connected via the connector 471 is set to be the source operation mode, the operation mode of the electronic device 401 may automatically be determined to be the sink operation mode. Where the operation mode of the external electronic device 402 is set to be the sink operation mode, the operation mode of the electronic device 401 may automatically be determined to be the source operation mode. Where the operation mode of the external electronic device 402 is set to be the dual mode, the operation mode of the electronic device 401 may randomly be determined to be the source operation mode or the sink operation mode.

According to an example embodiment of the present disclosure, when the electronic device 401 is connected with the external electronic device 402 through the connector 471, the electronic device 401 may support a dual mode in which the electronic device 401 may operate in the host operation mode or the client operation mode. In the dual mode, the configuration pins (CC1 and CC2) may be connected to the first circuit or the second circuit while being periodically toggled between the first circuit and the second circuit rather than remaining connected to one of the first circuit or the second circuit. For example, where, in the dual mode, the operation mode of the external electronic device 402 connected via the connector 471 is set to be the host operation mode, the operation mode of the electronic device 401 may automatically be determined to be the client operation mode. Where the operation mode of the external electronic device 402 is set to be the client operation mode, the operation mode of the electronic device 401 may automatically be determined to be the host operation mode. Where the operation mode of the external electronic device 402 is set to be the dual mode, the operation mode of the electronic device 401 may randomly be determined to be the host operation mode or the client operation mode.

According to an example embodiment of the present disclosure, the processor 411 may determine a second connection setting, which may be used for connection with the external electronic device 402 and the configuration pins, based on context information related to the electronic device 401 or the external electronic device 402 and control the connector control module 421 to connect the configuration pins selectively to the first circuit or the second circuit depending on the second connection setting. The connector control module 421 may include a switch for connecting the configuration pins selectively to a corresponding one of the first circuit and the second circuit.

According to an example embodiment of the present disclosure, the processor 411 may determine whether the electronic device 401 needs to operate in a first state or a second state based on the context information related to the electronic device 401 or the external electronic device 402 and may determine the second connection setting depending on the determined one of the first state and the second state. For example, the context information may include at least one of history information, application attribute information, state information, or type information about the external electronic device 401 or the external electronic device 402. The first state may be a state in which the electronic device 401 operates in the source operation mode, the host operation mode, or the DFP mode, and the second state may be a state in which the electronic device 401 operates in the sink operation mode, the client operation mode, or the UFP mode.

According to an example embodiment of the present disclosure, the processor 411 may control the connector control module 421 to connect the configuration pins to the first circuit for a first time of a first period and to the second circuit for a second time of the first period, which is different from the first time, depending on a corresponding one of the first connection setting, which is set as default, and the second connection setting which is determined based on the context information related to the electronic device 401 or the external electronic device 402. The first period may include the first time and the second time that is the remainder of the first period except for the first time. According to an embodiment of the present disclosure, where the electronic device 401 is configured to control the connector control module 421 in the first period, the external electronic device 402 may be configured to control the connector control module 422 in a second period which is different from the first period. Alternatively, the second period of the external electronic device 402 may be set to be the same as the first period.

According to an example embodiment of the present disclosure, the processor 411 may control the connector control module 421 to connect to the first circuit for providing the first power to the external electronic device 402 for the first time of the first period and to connect to the second circuit for receiving the second power from the external electronic device 402 for the second time different from the first time of the first period based on whether the electronic device 401 needs to operate in the source operation mode or the sink operation mode in the dual mode. The processor 411, where the electronic device 401 needs to operate in the source operation mode, may determine the second connection setting so that the first time is larger than the second time within the first period. The processor 411, where the electronic device 401 needs to operate in the sink operation mode, may determine the second connection setting so that the first time is smaller than the second time within the first period.

According to an example embodiment of the present disclosure, the processor 411 may control the connector control module 421 to connect to the first circuit for allowing the electronic device 401 to operate as a host for the external electronic device 402 for the first time of the first period and to connect to the second circuit for allowing the electronic device 401 to operate as a client for the external electronic device 402 for the second time different from the first time of the first period based on whether the electronic device 401 needs to operate in the host operation mode or the client operation mode in the dual mode. The processor 411, where the electronic device 401 needs to operate in the host operation mode, may determine the second connection setting so that the first time is larger than the second time within the first period. Where the electronic device 401 needs to operate in the client operation mode, the processor 411 may determine the second connection setting so that the first time is smaller than the second time within the first period. According to an embodiment of the present disclosure, when the electronic device 401 is connected with the external electronic device 402 via the connector 471, the processor 411 may determine whether the electronic device 401 needs to operate in the source operation mode or the sink operation mode based on the type information about the electronic device 401 or the external electronic device 402 in the context information related to the electronic device 401 or the external electronic device 402. When the electronic device 401 is connected with the external electronic device 402 via the connector 471, the processor 411 may determine whether the electronic device 401 needs to operate in the source operation mode or the sink operation mode based on the state information about the electronic device 401 or the external electronic device 402 in the context information. When the electronic device 401 is connected with the external electronic device 402 via the connector 471, the processor 411 may determine whether the electronic device 401 needs to operate in the host operation mode or the client operation mode based on the application attribute information about the electronic device 401 or the external electronic device 402 in the context information related to the electronic device 401 or the external electronic device 402. For example, where the electronic device 401 is a smartphone, and the external electronic device 402 is a laptop computer, the operation mode of the electronic device 401 may be determined to be the sink operation mode. Where the electronic device 401 and the external electronic device 402 both are smartphones, and the amount of power of the electronic device 401 is larger than the amount of power of the external electronic device 402, the operation mode of the electronic device 401 may be determined to be the source operation mode. Where an application for transmitting files between the electronic device 401 and the external electronic device 402 is running, and a file is delivered from the electronic device 401 to the external electronic device 402, the operation mode of the electronic device 401 may be determined to be the host operation mode.

According to an example embodiment of the present disclosure, when the electronic device 401 is determined to operate in the client operation mode under the circumstance where the electronic device 401 and the external electronic device 402 both are in the dual mode, and the electronic device 401 is supposed to operate in the host operation mode, the processor 411 may control the connector control module 421 to connect the configuration pins to the first circuit and send a request for connecting the configuration pins of the external electronic device 402 to the second circuit to the external electronic device 402.

According to an example embodiment of the present disclosure, when there is a request for changing operations to change the operation mode of the electronic device 401 into the client operation mode from the running application under the circumstance where the electronic device 401 and the external electronic device 402 both are in the dual mode, and the electronic device 401 operates in the host operation mode, the processor 411 may control the connector control module 421 to connect the configuration pins to the second circuit and send a request for connecting the configuration pins of the external electronic device 402 to the first circuit to the external electronic device 402.

According to an example embodiment of the present disclosure, when receiving the request for changing operations from the external electronic device 402 under the circumstance where the electronic device 401 and the external electronic device 402 both are in the dual mode, and the electronic device 402 operates in the host operation mode, the processor 411 may control the connector control module 421 to connect the configuration pins to the second circuit.

Fig. 5 is a diagram illustrating an example connector pin map structure according to an example embodiment of the present disclosure. According to an embodiment of the present disclosure, the connector of Fig. 5 may have a pin map structure as per USB type-C.

As illustrated in Fig. 5, the USB type-C pin may include 24 pins divided into two pin groups symmetrical with each other. For example, when a first pin group A1 to A12 is used, a second pin group B1 to B12 may not be used. Further, configuration pins CC1 and CC2, respectively positioned at A5 and B5, may be used to determine an operation state of the electronic device 401. The configuration pins CC1 and CC2 may identify whether the operation mode of the electronic device 401 is the source operation mode or the sink operation mode or may identify whether the operation mode of the electronic device 401 is the host operation mode or the client operation mode. The operation mode of the electronic device 401 may be determined depending on which one of the first circuit or the second circuit the configuration pins are connected to. Which one of the first circuit or the second circuit the configuration pins are connected to may be determined using a resistance calculated by current detection.

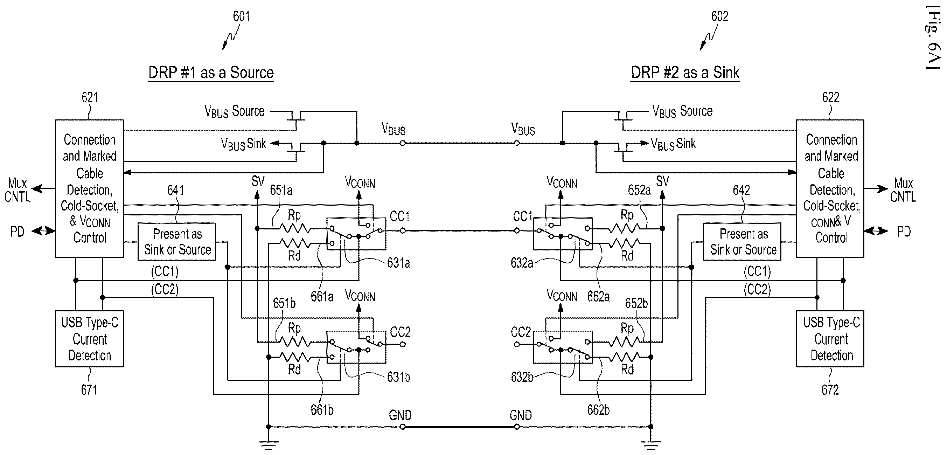

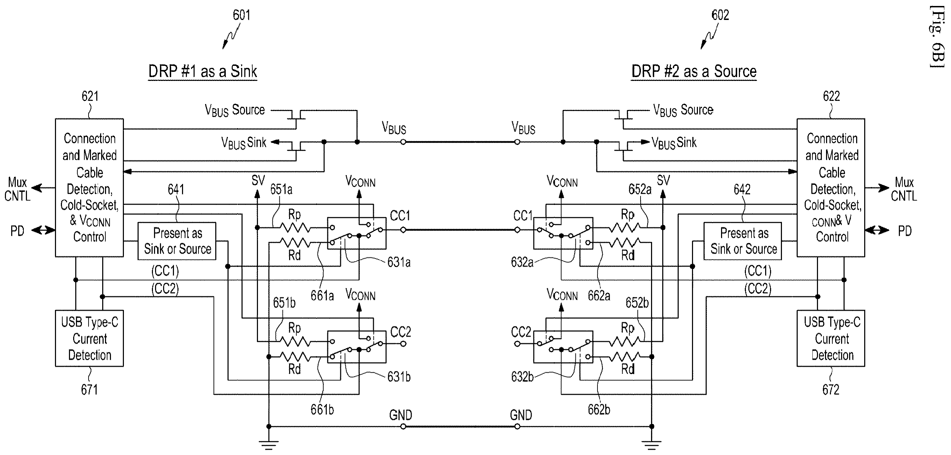

Figs. 6A and 6B are circuit diagrams illustrating a connector connection between electronic devices according to an example embodiment of the present disclosure.

Referring to Figs. 6A and 6B, connector control modules 601 and 602 may be operated under the control of processors 411 and 412, respectively, and may include connector controllers 621 and 622, a plurality of switches 631a, 631b, 632a, and 632b, switch controllers 641 and 642, a first circuit 651a, 651b, 652a, and 652b, a second circuit 661a, 661b, 662a, and 662b, and current detectors 671 and 672.

Fig. 6A illustrates an example internal circuit configuration of the connector control modules 601 and 602 when the electronic device 401 and the external electronic device 402 both are configured to operate in the dual mode, wherein the electronic device 401 operates as a source, and the external electronic device 402 operates as a sink. Fig. 6B illustrates an example internal circuit configuration of the connector control modules 601 and 602 when the electronic device 401 and the external electronic device 402 both are configured to operate in the dual mode, wherein the electronic device 401 operates as a sink, and the external electronic device 402 operates as a source.

Referring to Fig. 6A, where the electronic device 401 is in the state of operating as a source, the plurality of switches 631a and 631b of the connector control module 601 may be in the state of being connected with the first circuit 651a and 651b. When a resistance Rp is calculated (e.g., determined) from a current value received from the current detector 671, the connector controller 621 may identify that the plurality of switches 631a and 631b are connected with the first circuit 651a and 651b, and the electronic device 401 may operate in the host operation mode in the source mode. In contrast, where the electronic device 402 is in the state of operating as a sink, the plurality of switches 632a and 632b of the connector control module 602 may be in the state of being connected with the second circuit 652a and 652b. When a resistance Rd is calculated from a current value received from the current detector 672, the connector controller 622 may identify that the plurality of switches 632a and 632b are connected with the second circuit 652a and 652b, and the external electronic device 402 may operate in the client operation mode in the sink mode. The connector controllers 621 and 622 may deliver their results of determination to their respective processors 411 and 412. The connector controllers 621 and 622 may deliver the current values received from the current detectors 671 and 672 to the processors 411 and 412 or deliver the resistances calculated from the current values to the processors 411 and 412.

Referring to Fig. 6B, where the electronic device 401 is in the state of operating as a sink, the plurality of switches 631a and 631b of the connector control module 601 may be in the state of being connected with the second circuit 661a and 661b. When a resistance Rd is calculated (e.g., determined) from a current value received from the current detector 671, the connector controller 621 may identify that the plurality of switches 631a and 631b are connected with the second circuit 661a and 661b, and the electronic device 401 may operate in the client operation mode in the sink mode. On the other hand, where the external electronic device 402 is in the state of operating as a source, the plurality of switches 632a and 632b of the connector control module 602 may be in the state of being connected with the first circuit 652a and 652b. When a resistance Rp is calculated from a current value received from the current detector 672, the connector controller 622 may identify that the plurality of switches 632a and 632b are connected with the first circuit 652a and 652b, and the external electronic device 402 may operate in the host operation mode in the source mode. The connector controller 621 and 622 may deliver their results of determination to their respective processors 411 and 412. The connector controllers 621 and 622 may deliver the current values received from the current detectors 671 and 672 to the processors 411 and 412 or deliver the resistances calculated from the current values to the processors 411 and 412.

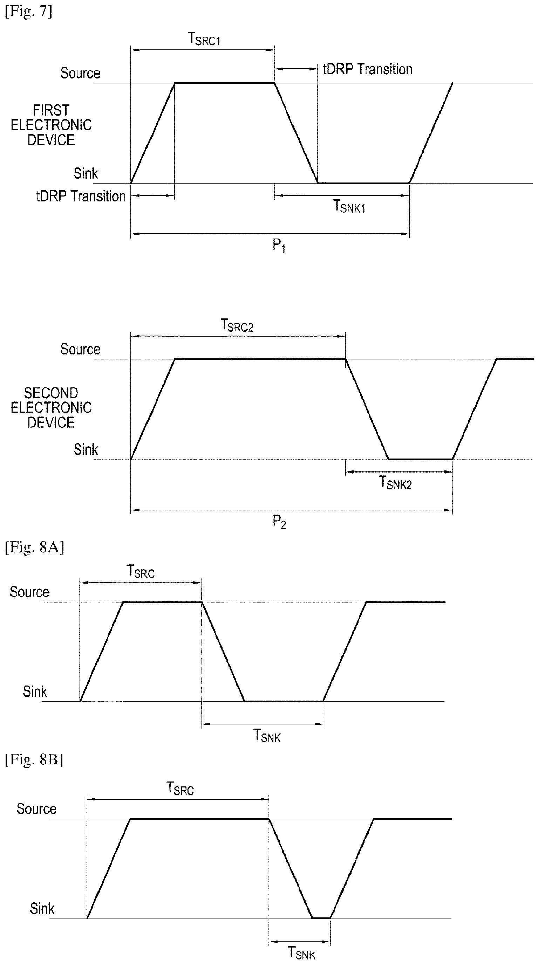

Fig. 7 is a diagram illustrating example switching timing for determining an operational state upon connection between electronic devices according to an example embodiment of the present disclosure. Fig. 7 illustrates timings TSRC1 and TSRC2 when the configuration pins are connected to the first circuit so that a first electronic device or a second electronic device may operate in the source operation mode and timings TSNK1 and TSNK2 when the configuration pins are connected to the second circuit so that the first electronic device or the second electronic device may operate in the sink operation mode. The timing when the switch turns from the first circuit or the second circuit to the other is denoted tDRP Transition.

According to an example embodiment of the present disclosure, in a method for determining an operation state upon connecting electronic devices together, where the first electronic device and the second electronic device both are in the dual mode, the switching periods for selectively connecting the configuration pins to the first circuit or the second circuit may be set to differ from each other as illustrated in Fig. 7.

Where the first electronic device is set to have the first connection setting which is a default setting, the timing TSRC1 when the configuration pins are connected to the first circuit may have the same duration as the timing TSNK1 when the configuration pins are connected to the second circuit. For example, the first connection setting may refer to a default setting or a setting in which the user sets no preference for the operation mode of the first electronic device between the source operation mode and the sink operation mode.

Where the second electronic device is configured to have the second connection setting that has a preference for operation in the source operation mode, the timing TSRC2 when the configuration pins are connected to the first circuit may have longer duration than the timing TSNK2 when the configuration pins are connected to the second circuit. According to an embodiment of the present disclosure, where it is preferred for the second electronic device to operate in the sink operation mode, the timing TSRC2 when the configuration pins are connected to the first circuit may have shorter duration than the timing TSNK2 when the configuration pins are connected to the second circuit. According to an embodiment of the present disclosure, the switching timing period PI of the configuration pins of the first electronic device may differ from the switching timing period P2 of the configuration pins of the second electronic device.

Figs. 8A and 8B are diagrams illustrating an example of varying a switching timing for determining an operational state of an electronic device according to an example embodiment of the present disclosure. Fig. 8A illustrates an example in which an electronic device is configured to have the first connection setting, and Fig. 8B illustrates a variation in the timing of connection to the first circuit or second circuit to the second connection timing in the electronic device.

According to an example embodiment of the present disclosure, in a method for varying the switching timing for determining an operation state by an electronic device, where the electronic device is first set in the dual mode and where the use history is accrued in the dual mode, the switch for selectively connecting the first circuit or second circuit to the configuration pins may be configured to have different periods as illustrated in Figs. 8A and 8B.

Where the electronic device is first set in the dual mode as illustrated in Fig. 8A, the electronic device cannot be aware whether the user prefers the source operation mode or sink operation mode. Thus, the timing TSRC when the configuration pins are connected to the first circuit may have the same duration as the timing TSNK when the configuration pins are connected to the second circuit.

As illustrated in Fig. 8B, when the number of times for determining the operation mode of the electronic device is then accrued to a predetermined number of times or more, the electronic device may adjust and set the duration of the timing TSRC when the configuration pins are connected to the first circuit and the timing TSNK when the configuration pins are connected to the second circuit so that the user's preference can be reflected. For example, when the electronic device is connected with the external electronic device 100 times, if the number of times in which the operation mode is determined to be the source operation mode is 70, and the number of times in which the operation mode is determined to be the sink operation mode is 30, the electronic device may adjust the duration of the timing TSRC when the configuration pins are connected to the first circuit and the timing TSNK when the configuration pins are connected to the second circuit in a ratio of, for example, 7 to 3.

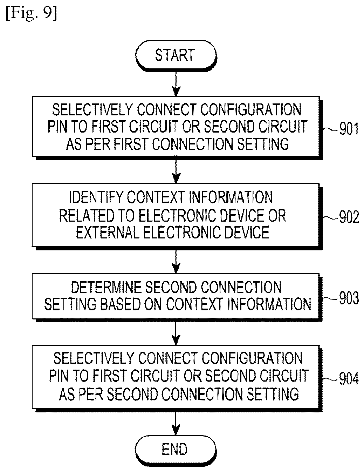

Fig. 9 is a flowchart illustrating an example method for determining an operational state of an electronic device according to an example embodiment of the present disclosure.

Fig. 9 illustrates an example method for determining an operation state of an electronic device according to an example embodiment of the present disclosure.

In operation 901, the electronic device may be set in a dual mode (DRP) in which the electronic device may play a role in a first state or second state when connected with an external electronic device via a connector. When the electronic device is set in the dual mode, a determination as to whether the electronic device is to operate in the first state or the second state is delayed. Thus, the configuration pins contained in the connector may selectively be connected to the first circuit or second circuit according to the first connection setting without remaining connected to one of the first circuit or the second circuit.

According to an embodiment of the present disclosure, the first connection setting may be a default setting or may be a setting in which the user sets no preference for the operation mode between the first state and the second state. According to an embodiment of the present disclosure, the electronic device may connect the configuration pins to the first circuit for a first time of a first period and to the second circuit for a second time different from the first time of the first period, according to the first connection setting. The first period may include the first time and the second time that is the remainder of the first period except for the first time. According to an embodiment of the present disclosure, the first connection setting may be a setting that is to be designated as default and may be a setting in which the first time for connection to the first circuit has the same or similar duration to the second time for connection to the second circuit.

According to an embodiment of the present disclosure, the first state and second state may be operation states of the electronic device when the electronic device is connected with the external electronic device via the connector. The first state may be a state in which the electronic device operates as a host, source, or DFP. The second state may be a state in which the electronic device operates as a client, sink, or UFP.

According to an embodiment of the present disclosure, the first circuit and the second circuit may be circuits for determining the operation state of the electronic device when the electronic device is connected with the external electronic device via the connector. The first circuit may be a circuit for allowing the electronic device to provide first power to the external electronic device and for operating the electronic device as a host for the external electronic device. The second circuit may be a circuit for allowing the electronic device to receive second power from the external electronic device or for operating the electronic device as a client for the external electronic device.

In operation 902, the electronic device may identify context information related to the electronic device or the external electronic device. According to an embodiment of the present disclosure, the context information may include at least one of history information, application attribute information, state information, or type information about the external electronic device or the external electronic device.

In operation 903, the electronic device may determine the second connection setting to be used for connection between the configuration pins and the external electronic device based on the identified context information. According to an embodiment of the present disclosure, when the electronic device is connected with the external electronic device via the connector, the electronic device may determine whether the electronic device needs to operate in the first state or second state and determine the second connection setting depending on the determined one of the first state and the second state.

In operation 904, the electronic device may selectively connect the configuration pins to the first circuit or the second circuit according to the determined second connection setting. According to an embodiment of the present disclosure, the electronic device may connect the configuration pins to the first circuit for a first time of a first period and to the second circuit for a second time different from the first time of the first period, according to the second connection setting. The first period may include the first time and the second time that is the remainder of the first period except for the first time.

According to an embodiment of the present disclosure, the second connection setting may be one allowing the first time for connection to the first circuit to differ from the second time for connection to the second circuit so as to relatively increase a chance of connection to a circuit corresponding to a preferred operation mode (e.g., the first state or second state) of the electronic device of the first circuit or second circuit. For example, where the electronic device needs to operate in the first state, the electronic device may determine the second connection setting so that the first time is larger than the second time within the first period. Where the electronic device needs to operate in the second state, the electronic device may determine the second connection setting so that the first time is smaller than the second time within the first period.

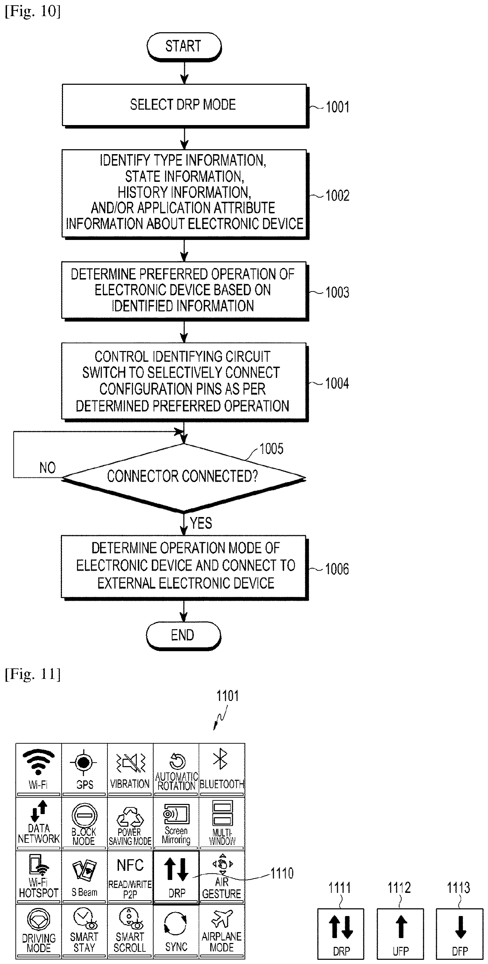

Fig. 10 is a flowchart illustrating an example process for determining an operational state as per a connector connection by an electronic device according to an example embodiment of the present disclosure.

A process for determining an operational state as per a connector connection by an electronic device is described below with reference to Fig. 10, according to an example embodiment of the present disclosure.

In operation 1001, when connected with the external electronic device via the connector, the electronic device may be set to have the dual mode (DRP) where the electronic device may operate in the source operation mode where the electronic device provides the first power to the external electronic device or the electronic device may operate in the sink operation mode where the electronic device may receive the second power from the external electronic device. According to an embodiment of the present disclosure, when connected with the external electronic device via the connector, the electronic device may be set to have the host operation mode where the electronic device operates as a host for the external electronic device and the client operation mode where the electronic device operates as a client for the external electronic device.

In operation 1002, the electronic device may identify context information related to the electronic device or the external electronic device. According to an embodiment of the present disclosure, the context information may include at least one of history information, application attribute information, state information, or type information about the external electronic device or the external electronic device.

In operation 1003, the electronic device may determine a preferred operation of the electronic device based on the identified context information. According to an embodiment of the present disclosure, the electronic device may determine the preferred operation of the electronic device based on the type of the electronic device or the external electronic device. For example, the preferred operation of the electronic device may be determined depending on the type, e.g., a computer, laptop computer, mobile phone, tablet personal computer (PC), or battery pack. According to an embodiment of the present disclosure, the electronic device may determine the preferred operation of the electronic device based on the attribute of an application running on the electronic device or the external electronic device. For example, where the running application uses a USB host application program interface (API), the preferred operation of the electronic device may be determined to be the host operation mode, and where the running application uses a USB accessory API, the preferred operation of the electronic device may be determined to be the client operation mode. According to an embodiment of the present disclosure, the electronic device may determine the preferred operation of the electronic device based on history information about whether the electronic device has operated in the source operation mode or sink operation mode before or whether the electronic device has operated in the host operation mode or client operation mode before. For example, where the number of times in which the electronic device has been determined to operate in the host operation mode before is larger than the number of times in which the electronic device has been determined to operate in the client operation mode, the preferred operation of the electronic device may be determined to be the host operation mode. According to an embodiment of the present disclosure, the preferred operation of the electronic device may be determined depending on the user's settings. For example, the user may previously set a preferred connection operation through a user menu and may determine the preferred operation of the electronic device based on the user's set operation upon performing the connection operation.

In operation 1004, the electronic device may selectively connect the configuration pins to the first circuit or the second circuit according to the determined preferred operation. According to an embodiment of the present disclosure, when the determined preferred operation is the host operation mode, the electronic device may make a setting so that the time of connecting to the first circuit identifying that the operation mode is the host mode is relatively longer than the time of connecting to the second circuit identifying that the operation mode is the client operation mode. When the determined preferred operation is the client operation mode, the electronic device may make a setting so that the time of connecting to the first circuit is relatively shorter than the time of connecting to the second circuit.

In operation 1005, the electronic device may determine whether a connection with the external electronic device via the connector has been made. Upon identifying the connection with the external electronic device, the electronic device, in operation 1006, may determine that the operation mode of the electronic device is the host mode or client mode depending on whether the configuration pins are connected to the first circuit or the second circuit at the time of the connector connection and may connect the electronic device with the external electronic device.

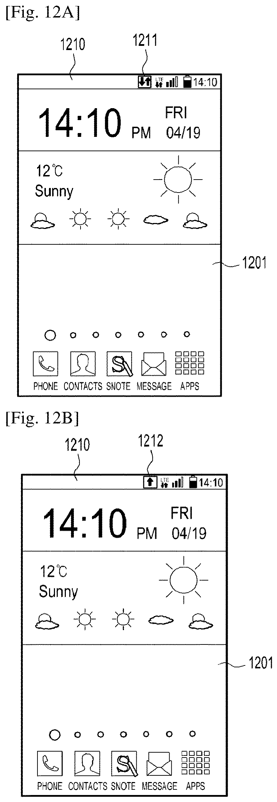

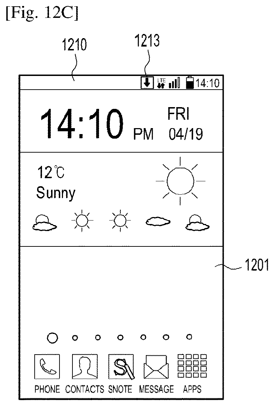

Fig. 11 is a diagram illustrating an example of a setting screen of an electronic device according to an example embodiment of the present disclosure. Figs. 12A, 12B and 12C are diagrams illustrating example screens of an electronic device according to an example embodiment of the present disclosure.

According to an example embodiment of the present disclosure, when the electronic device is connected with the external electronic device via the connector, the user may set his desired operation mode by various methods, and the electronic device may display the set operation mode on the display.

Referring to Fig. 11, the electronic device may display and provide, on the display, a setting screen 1101 allowing for setting a mode of the electronic device. The setting screen 1101 may display an icon 1110 indicating the setting mode of the electronic device and allowing the current setting to be changed. When the user selects the icon 1110, any one popped-up icon of a dual mode setting icon 1111, a client mode setting icon 1112, and a host mode setting icon 1113 may be selected, and the operation mode of the electronic device may be set accordingly. According to an embodiment of the present disclosure, the screen for setting the mode of the electronic device may provide a popup menu. The provided menu may provide options that the user may select. As the user selects his preferred option, the operation mode of the electronic device may be set. According to an embodiment of the present disclosure, the electronic device may set the operation mode of the electronic device before connecting to the external electronic device via the connector. The electronic device may set the operation mode of the electronic device at the time of connection with the external electronic device via the connector. The electronic device may set its operation mode to another operation mode after it is connected with the external electronic device via the connector and its operation mode is determined.

Referring to Figs. 12A, 12B and 12C, when the operation mode of the electronic device is set by the user, the electronic device may display a setting state of the operation mode of the electronic device on at least part of the screen 1201 of the display. According to an embodiment of the present disclosure, the electronic device may display the setting state of the operation mode on a status bar 1210 that is displayed on an upper part of the screen 1201 of the display. According to an embodiment of the present disclosure, when the operation mode of the electronic device is set to the dual mode by the user, the electronic device may display, on the status bar 1210, a dual mode state icon 1211 indicating that the dual mode is selected as the operation mode as illustrated in Fig. 12A. When the operation mode of the electronic device is set to the client mode by the user, the electronic device may display, on the status bar 1210, a client mode state icon 1212 indicating that the client mode is selected as the operation mode as illustrated in Fig. 12B. When the operation mode of the electronic device is set to the host mode by the user, the electronic device may display, on the status bar 1210, a host mode state icon 1213 indicating that the host mode is selected as the operation mode as illustrated in Fig. 12C.

As is apparent from the foregoing description, according to embodiments of the present disclosure, the role of the electronic device may dynamically be determined or varied based on context information including the user's intention, use pattern, or the state or type of the electronic device or external electronic device when the electronic device is connected with the external electronic device via a USB type-C connector, e.g., by adjusting the period of connection or toggling between the configuration pins (CC1 and CC2) and the resistors (Rp and Rd).

The various example embodiments herein are provided merely for better understanding of the present disclosure, and the present disclosure should not be limited thereto or thereby. It should be appreciated by one of ordinary skill in the art that various changes in form or detail may be made to the example embodiments without departing from the scope of the present disclosure defined by the following claims.

Certain examples of the present disclosure provide one or more electronic devices and/or methods according to one or more of the following exemplary aspects.

In accordance with a first aspect, there is provided an electronic device, comprising: a first circuit configured to provide first power to a first external electronic device; a second circuit configured to provide second power from the first external electronic device or a second external electronic device; a connector configured to be electrically connected to the first external electronic device or the second external electronic device, the connector including a configuration pin configured to selectively connect to the first circuit or the second circuit based on a first connection setting; and a processor configured to control the connector, the processor further configured to: determine a second connection setting to be used for connection of the configuration pin to the first external electronic device or the second external electronic device based on, at least one of: context information related to the electronic device, context information related to the first external electronic device, or context information related to the second external electronic device, and selectively connect the configuration pin to the first circuit or the second circuit based on the second connection setting.

In accordance with a second aspect, there is provided an electronic device according to the first aspect, further comprising a switch configured to selectively connect the configuration pin to a corresponding one of the first circuit and the second circuit based on a corresponding one of the first connection setting and the second connection setting.

In accordance with a third aspect, there is provided an electronic device according to the first aspect, wherein the processor is configured to determine whether the electronic device is to operate in a first state or a second state based on the context information and to determine the second connection setting based on the determined one of the first state and the second state.

In accordance with a fourth aspect, there is provided an electronic device according to the third aspect, wherein the first state is a state in which the electronic device operates as at least one of a host, a source, or a downstream facing port (DFP), and the second state is a state in which the electronic device operates as at least one of a client, a sink, or an upstream facing port (UFP).

In accordance with a fifth aspect, there is provided an electronic device according to the first aspect, wherein the processor is configured to selectively connect the configuration pin to the first circuit for a first time of a first period and to the second circuit for a second time different from the first time of the first period based on a corresponding one of the first connection setting and the second connection setting.

In accordance with a sixth aspect, there is provided an electronic device according to the fifth aspect, wherein the first period includes the first time and the second time is a remainder of the first period less the first time.

In accordance with a seventh aspect, there is provided an electronic device according to the first aspect, wherein the context information includes at least one of type information about the electronic device, state information about the electronic device, application attribute information about the electronic device, history information about the electronic device, type information about the first external electronic device, state information about the first external electronic device, application attribute information about the first external electronic device, history information about the first external electronic device, type information about the second external electronic device, state information about the second external electronic device, application attribute information about the second external electronic device and history information about the second external electronic device.

In accordance with an eighth aspect, there is provided an electronic device according to the first aspect, wherein when the electronic device is electrically connected with the first external electronic device or the second external electronic device via the connector, the processor is configured to determine that the electronic device operates in a first state when the configuration pin is connected to the first circuit, and to determine that the electronic device operates in a second state when the configuration pin is connected to the second circuit.

In accordance with a ninth aspect, there is provided an electronic device according to the eighth aspect, wherein the processor is configured to determine whether the electronic device is to operate in the first state or the second state based on the context information, when the electronic device is determined to operate in the first state, and the electronic device is determined to operate in the second state, to connect the configuration pin to the second circuit, and to send a request for connecting, to the first circuit, the configuration pin of the first external electronic device or the second external electronic device connected via the connector.

In accordance with a tenth aspect, there is provided an electronic device according to the eighth aspect, wherein when there is a request for changing an operation state from an inside of the electronic device while the electronic device operates in the first state, the processor is configured to connect the configuration pin to the second circuit and to send, to the first external electronic device or the second external electronic device, a request for connecting, to the first circuit, the configuration pin of the first external electronic device or the second external electronic device connected via the connector.

In accordance with an eleventh aspect, there is provided an electronic device according to the eighth aspect, wherein when there is a request for changing an operation state from the first external electronic device or the second external electronic device connected via the connector while the electronic device operates in the first state, the processor is configured to connect the configuration pin to the second circuit.

In accordance with a twelfth aspect, there is provided an electronic device according to the first aspect, wherein the connector is a universal serial bus (USB) type-C connector.

In accordance with a thirteenth aspect, there is provided an electronic device according to the first aspect, wherein the first circuit comprises a circuit configured to operate the electronic device as a host for the external electronic device, and the second circuit comprises a circuit configured to operate the electronic device as a client for the external electronic device.

In accordance with a fourteenth aspect, there is provided an electronic device according to the first aspect, wherein the first circuit includes a pull-up resistor, and the second circuit includes a pull-down resistor.

In accordance with a fifteenth aspect, there is provided a method for determining a role of an electronic device electrically connected with an external electronic device via a connector, the method comprising: selectively connecting a configuration pin included in the connector to a first circuit or a second circuit based on a first connection setting; determining a second connection setting to be used for connection of the configuration pin to the external electronic device based on, at least one of: context information related to the electronic device or context information related to the external electronic device; selectively connecting the configuration pin to the first circuit or the second circuit based on the second connection setting; and determining whether the electronic device operates in a first state or a second state based on whether the configuration pin is connected to the first circuit or the second circuit when the electronic device is electrically connected with the external electronic device via the connector.

## Claims

1. An electronic device, comprising:
a display;
a first circuit configured to provide first power to a first external electronic device;
a second circuit configured to receive second power from the first external electronic device;
a connector configured to be electrically connected to the first external electronic device, the connector including a configuration pin configured to selectively connect to the first circuit or the second circuit based on a first connection setting; and
a processor configured to control the connector, the processor further configured to:
control the display to display an indication that whether providing the first power to the first external electronic device or receive the second power from the first external electronic device,
in response to a user input, change the first connection setting to a second connection setting for connection of the configuration pin to the first external electronic device, and
selectively connect the configuration pin to the first circuit or the second circuit based on the second connection setting.

2. The electronic device of claim 1, further comprising a switch configured to selectively connect the configuration pin to a corresponding one of the first circuit and the second circuit based on a corresponding one of the first connection setting and the second connection setting.

3. The electronic device of claim 1, wherein the processor is configured to determine whether the electronic device is to operate in a first state or a second state based on the user input and to determine the second connection setting based on the determined one of the first state and the second state.

4. The electronic device of claim 3, wherein the first state is a state in which the electronic device operates as at least one of a host, a source, or a downstream facing port, DFP, and the second state is a state in which the electronic device operates as at least one of a client, a sink, or an upstream facing port, UFP.

5. The electronic device of claim 1, wherein the processor is configured to selectively connect the configuration pin to the first circuit for a first time of a first period and to the second circuit for a second time different from the first time of the first period based on a corresponding one of the first connection setting and the second connection setting.

6. The electronic device of claim 5, wherein the first period includes the first time and the second time is a remainder of the first period less the first time.

7. The electronic device of claim 1,
wherein the processor is configured to control the display to display a plurality of icons for changing connection setting for connection of the configuration pin to the first external electronic device, and
wherein the user input includes selecting at least one of icons among the plurality of icons.

8. The electronic device of claim 1, wherein when the electronic device is electrically connected with the first external electronic device or the second external electronic device via the connector, the processor is configured to determine that the electronic device operates in a first state when the configuration pin is connected to the first circuit, and to determine that the electronic device operates in a second state when the configuration pin is connected to the second circuit.

9. The electronic device of claim 8, wherein the processor is configured to determine whether the electronic device is to operate in the first state or the second state based on the user input, when the electronic device is determined to operate in the first state, and the electronic device is determined to operate in the second state, to connect the configuration pin to the second circuit, and to send a request for connecting, to the first circuit, the configuration pin of the first external electronic device or the second external electronic device connected via the connector.

10. The electronic device of claim 8, wherein when there is a request for changing an operation state from an inside of the electronic device while the electronic device operates in the first state, the processor is configured to connect the configuration pin to the second circuit and to send, to the first external electronic device or the second external electronic device, a request for connecting, to the first circuit, the configuration pin of the first external electronic device or the second external electronic device connected via the connector.

11. The electronic device of claim 8, wherein when there is a request for changing an operation state from the first external electronic device or the second external electronic device connected via the connector while the electronic device operates in the first state, the processor is configured to connect the configuration pin to the second circuit.

12. The electronic device of claim 1, wherein the connector is a universal serial bus, USB, type-C connector.
